# EUROPEAN PATENT SPECIFICATION

(11) **EP 4 248 649 B1**
(45) Date of publication and mention of the grant of the patent: **15.10.2025**
(21) Application number: 21709629.6
(22) Date of filing: 25.02.2021
(51) Int. Cl.: H04N 23/84, G06T 3/4015, H04N 25/133, H04N 25/13, H04N 25/445, H04N 25/60

(54) **IMAGE CAPTURE APPARATUS**
BILDAUFNAHMEGERÄT
APPAREIL DE CAPTURE D'IMAGE

(43) Date of publication of application: 27.09.2023
(73) Proprietor: Huawei Technologies Co., Ltd., Shenzhen, Guangdong 518129 (CN)
(72) Inventor: BUJOREANU, Denis, 80992 Munich (DE); MASSIP, Pierre, 80992 Munich (DE)
(74) Representative: Epping - Hermann - Fischer
(86) International application number: PCT/EP2021/054626
(87) International publication number: WO 2022/179686

(56) References cited:
- EP-A2- 2 364 026
- US-A1- 2011 032 395
- US-A1- 2019 182 465

## Description

### TECHNICAL FIELD

The present disclosure relates generally to the field of image sensors, and more specifically, to a colour filter array for an image sensor and an image capture apparatus.

### BACKGROUND

An image sensor (or an image sensor chip) is an integrated circuit used for the measurement of light intensity and convert that measured light intensity into electrical energy, which is further used to make an image. The image sensor is fabricated using semiconductor-based technology, which generally comprises a colour filter array, a plurality of sensor pixels made up of some colour filter elements, such as light-sensitive elements, microlenses, micro-electrical components, and the like. With the development of digital image-based technology, the image sensors have become universal over the last decade, and there is a growing demand to modify the sensitivity of the image sensor.

Conventionally, certain attempts have been made to modify the sensitivity of the image sensor, where monochrome pixels and colour pixels are acquired in different image sensors. In such attempts, one kernel (4x4) of a conventional colour filter array (CFA) includes twelve (12) monochrome pixels and four (4) pixels of one colour (e.g. green colour pixels) only. Similarly, another kernel (4x4) of ther conventional colour filter array (CFA) includes twelve (12) monochrome pixels and four (4) pixels of another colour (e.g. red colour pixels) only, and so on. Thus each kernel (4x4) of the conventional CFA includes twelve (12) monochrome pixels and four (4) pixels of one colour (e.g. green colour pixels, or red colour pixels, or blue colour pixels) only, while other colour pixels are arranged in other kernels. However, the sensitivity and colour resolution of such image sensors is relatively low in comparison with the pixel size, due to the distance between nearest kernels of the same colour.

Therefore, in light of the foregoing discussion, there exists a need to overcome the aforementioned drawbacks associated with the conventional image sensor.

US 2011/032395 A1 describes an imaging unit including an image sensor with a number of pixels arranged in a matrix, the pixels having color pixels where color filters are disposed and white pixels where the color filters are not disposed.

EP 2 364 026 A2 describes a portable hand held optical reader having a specially constructed two-dimensional image sensor array. The image sensor array is a hybrid monochrome and color image sensor pixel array.

US 2019/182465 A1 describes an imaging device including an imaging element. The imaginig element uses a color filter arrangement that includes color pixels as first pixels and white pixels as second pixels.

### SUMMARY

The invention is set out in the appended set of claims. The present disclosure seeks to provide an image capture apparatus. An aim of the present disclosure is to provide a solution that overcomes at least partially the problems encountered in the prior art and provides an image capture apparatus with improved sensitivity and colour resolution.

The object of the present disclosure is achieved by the solutions provided in the enclosed independent claim. Advantageous implementations of the present disclosure are further defined in the dependent claims.

In one aspect, the present disclosure provides an image capture apparatus comprises an image sensor and an image processor. The image sensor comprises a colour filter array. The colour filter array comprises a plurality of pixels arranged in one or more kernels of 4x4 pixels, wherein each kernel includes four quadrants, each quadrant having three monochrome pixels and one colour pixel, and wherein each kernel includes quadrants corresponding to 3 or more different colours. The image sensor further comprises an array of sensor pixels aligned with the pixels of the colour filter array.

By virtue of using the colour filter array (CFA), the image details obtained are with a better sampling rate (i.e., ~1pixels), further, the colour filter array can be adapted to image signal processor (ISP) already out of foundry with almost no parallax error. The chroma is spread in a better manner as compared to a conventional colour filter array to get more light due to the merging of the four colours pixels. For example, the four colours pixels may be arranged in three (3) channel of a standard RGGB (Red Green Green Blue) pattern along with twelve (12) monochrome pixels in each kernel of 4x4 matrix. Such arrangement provides a high-resolution image with significantly improved colour representation.

A high-resolution image can be generated from a fused output of the monochrome image data and colour data. Furthermore, the output of the image sensor is aligned, allowing the data to be easily fused without additional alignment.

The image processor includes a fusion unit configured to combine signals from a plurality of sensor pixels aligned with monochrome pixels of the colour filter array with signals from a plurality of sensor pixels aligned with colour pixels of the colour filter array and output a first fusion pattern.

The fusion unit is further configured to fuse the first fusion pattern and a RGGB sensor output of the same field of view as that of colour pixels of the first fusion pattern, and output a second fusion pattern, wherein the RGGB sensor output comprises colour pixels arranged in RGGB pattern, wherein the colour pixels comprise red colour pixels, green colour pixels, and blue colour pixels.

By virtue of using the image sensor, the output image of the image capture apparatus is high resolution as compared to a conventional image capture apparatus with the same number of pixels.

In an implementation form, the image sensor further comprises a first output unit configured to generate a monochrome output based on signals from a plurality of sensor pixels aligned with monochrome pixels of the colour filter array; and a second output unit configured to generate a colour output based on signals from a plurality of sensor pixels aligned with colour pixels of the colour filter array.

By virtue of using the first output unit and the second output unit, the monochrome output and the colour output are obtained, which are beneficial with respect to spatial enhancement.

In an implementation form, the image processor includes an interpolation unit configured to interpolate a monochrome signal value corresponding to a location of each colour pixel of the colour filter array.

By virtue of using the interpolation unit, interpolated monochrome signals are obtained corresponding to the colour pixels that are arranged in the kernel. For example, for an RGGB kernel pattern, signals corresponding to the red colour pixel, green colour pixel and blue colour pixel may be obtained.

In an implementation form, the fusion unit is implemented in hardware.

By virtue of using the fusion unit, the signals from a plurality of sensor pixels (i.e. the monochrome output and the colour output) are combined to produce a high-resolution colour image. As data from the mono and colors sensor are closely, the hardware required to fuse the signals can consume less power.

In an implementation form, the colour pixels in each kernel are arranged in a pattern selected from: RGGB (red-green-green-blue), RGBE (red-green-blue-emerald), RYYB (red-yellow-yellow-blue), CYYM (cyan-yellow-yellow-magenta), CYGM (cyan-yellow-green-magenta) and RGBW (red-green-blue-white).

It is to be appreciated that all the aforementioned implementation forms can be combined.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a colour filter array for an image sensor, in accordance with an embodiment of the present disclosure;
FIG. 2 is a schematic illustration of an image sensor, in accordance with an embodiment of the present disclosure;
FIG. 3A is a block diagram that illustrates an image capture apparatus, in accordance with an embodiment of the present disclosure;
FIG. 3B is an exemplary implementation of the colour filter array for an image sensor, in accordance with an embodiment of the present disclosure;
FIG. 3C is an exemplary implementation of the colour filter array for an image sensor, in accordance with an embodiment of the present disclosure;
FIG. 3D is an exemplary implementation for the fusion of the monochrome output and the colour output, in accordance with another embodiment of the present disclosure;
FIG. 3E is an exemplary implementation of an enhanced fusion of the first fusion pattern and the RGGB sensor output, in accordance with another embodiment of the present disclosure;

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

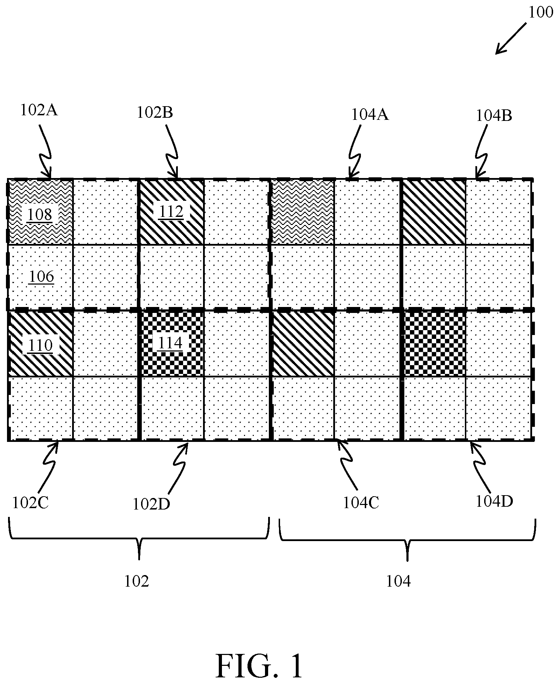

FIG. 1 is a schematic illustration of a colour filter array for an image sensor, in accordance with an embodiment of the present disclosure. With reference to FIG. 1, there is shown a colour filter array (CFA) **100.** The colour filter array **100** comprises a plurality of pixels arranged in one or more kernels of 4x4 pixels, for example, a first kernel **102** and a second kernel **104.** Notably, each kernel includes four quadrants, such as the first kernel **102** including four different quadrants **102A-102D** and similarly, the second kernel **104** including another four different quadrants **104A-104D.** Notably, each of the four quadrants in the kernel includes three monochrome pixels and one colour pixel. The colour pixel of each quadrant defines a quadrant colour of the quadrant. Herein, for example, the quadrant **102A** includes three monochrome pixels, such as the monochrome pixel **106,** and one colour pixel **108.** In an example, the four quadrants in each kernel, such as the quadrants **102A-102D** and **104A-104D** in first kernel **102** and second kernel **104** respectively, are arranged in an RGGB pattern. Therefore, in the first kernel **102,** the colour pixel **108** is red, the colour pixels **110** and **112** are green and the colour pixel **114** is blue. The colour pixels **108, 110, 112, 114** may be provided in any order. The colour pixel in the second kernel **104** are arranged in a similar RGGB pattern.

In other embodiments, the four quadrants in each kernel, such as the quadrants **102A-102D** and **104A-104D** in first kernel **102** and second kernel **104** respectively, may include colours arranged in any suitable pattern, for example, RGGB (red-green-green-blue), RGBE (red-green-blue-emerald), RYYB (red-yellow-yellow-blue), CYYM (cyan-yellow-yellow-magenta), CYGM (cyan-yellow-green-magenta) or RGBW (red-green-blue-white).

The colour filter array (CFA) **100** functions as mask placed on sensor pixels of an image sensor that allows the image sensor to capture colour information. The colour filter array **100** may also be referred to as a colour filter mosaic (CFM). The colour filter array **100** is configured to filter out the incoming light by wavelength range, such as by blocking some particular wavelength range of the incoming light.

The first kernel **102** and the second kernel **104** are the small matrices used to apply some effects, such as outlining, blurring, sharpening, and the like. The first kernel **102** and the second kernel **104** generally includes a plurality of pixels made up of some colour filter elements, such as light-sensitive elements, micro-lenses, micro-electrical components, and the like. The first kernel **102** and the second kernel **104** are also known as one or more kernels. Notably, colour filter arrays enable conventional photosensors to detect light intensity specific to certain wavelengths and allow separation of colour information for an image. Notably, the pixels separate the light by wavelength range, such that the filtered intensities include information about the colour of the light.

The monochrome pixels **106** are the colour filter elements (i.e., pixels) where each pixel can have one of the two colours (i.e., black and white) and generally used to represents black and white images only. The monochrome pixels **106** are more sensitive than colour pixels because of the nonappearance of wavelength selective colour filter elements (i.e., pixels). The colour pixels may include wavelength selective colour filter elements (i.e., pixels), which are arranged in red (R), green (G), green (G) and blue (B) pattern, such as the red colour pixel **108,** the green colour pixels **110** and **112,** and the blue colour pixel **114.** Thus, the colour pixels are used to represents colour images (or to capture colour information).

The colour filter array **100** comprises a plurality of pixels, such as the monochrome pixels **106** and the colour pixels (i.e. the red colour pixel **108,** the green colour pixels **110** and **112,** and the blue colour pixel **114)** that are arranged in one or more kernels, such as the first kernel **102** and second kernel **104** of 4x4 pixels. The first kernel **102** includes four quadrants **102A-102D** and the second kernel **104** includes another four quadrants **104A-104D.** Each of the quadrant **102A-102D** and **104A-104D** has three monochrome pixels, such as the monochrome pixel **106** and one colour pixel, such as the red colour pixel **108,** the green colour pixels **110** and **112,** and the blue colour pixel **114.** Further, the colour pixel also defines a quadrant colour for each quadrant **102A-102D** and **104A-104D.** For example, the red colour pixel **108** defines the colour for the quadrant **102A,** the green colour pixels **110** and **112** define colours for the quadrants **102B** and **102C,** and the blue colour pixel **114** defines the colour for the quadrant **102D** of the first kernel **102.**

It will be appreciated that in conventional image sensors monochromatic and coloured information relating to an image is obtained using different sensors aligned next to each other. Although such sensors provide accurate colour information, the resulting images from the image sensor comprise parallax. Specifically, the monochromatic and coloured information relating to an image is not well aligned, especially in an event the dept is complex.

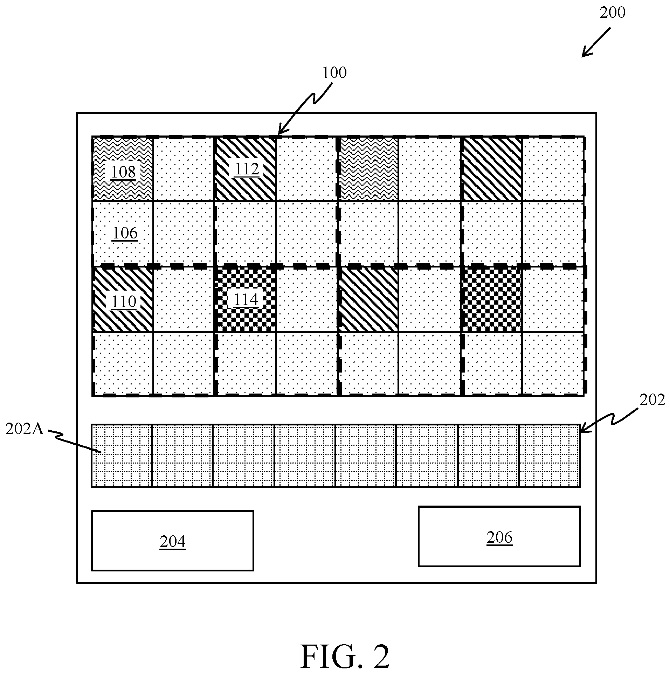

FIG. 2 is a schematic illustration of an image sensor, in accordance with an embodiment of the present disclosure. With reference to FIG. 2, there is shown an image sensor **200.** The image sensor **200** comprises the colour filter array **100,** and an array of sensor pixels **202.** The image sensor **200** further comprises a first output unit **204,** and a second output unit **206.** The array of sensor pixels **202** further includes a plurality of sensor pixels, such as the sensor pixel **202A.**

The image sensor **200** is an integrated circuit used for the measurement of light intensity and convert that measured light intensity into electrical energy, which is further used to construct an image. The most common image sensors are based on metal-oxide-semiconductor (MOS) technology and are one of two primary types, i.e., charge-coupled device (CCD) image sensor and the active-pixel image sensor (or CMOS image sensor).

The array of sensor pixels **202** are aligned with the monochrome pixels **106** and the colour pixels of the colour filter array **100,** as shown in an example. The array of sensor pixels **202** includes a plurality of sensor pixels, such as the sensor pixel **202A,** that are used in the image sensor **200** for the measurement of light intensity and construct an image. The plurality of sensor pixels, such as the sensor pixel **202A,** are generally based on the type of image sensor **200.** For example, in the active-pixel image sensor, the sensor pixels as represented by a photodetector (or pinned photodiode), a floating diffusion, and the like. Similarly, in the charge-coupled device (CCD) based image sensor, the sensor pixels are represented by p-doped metal-oxide-semiconductor (MOS) capacitors.

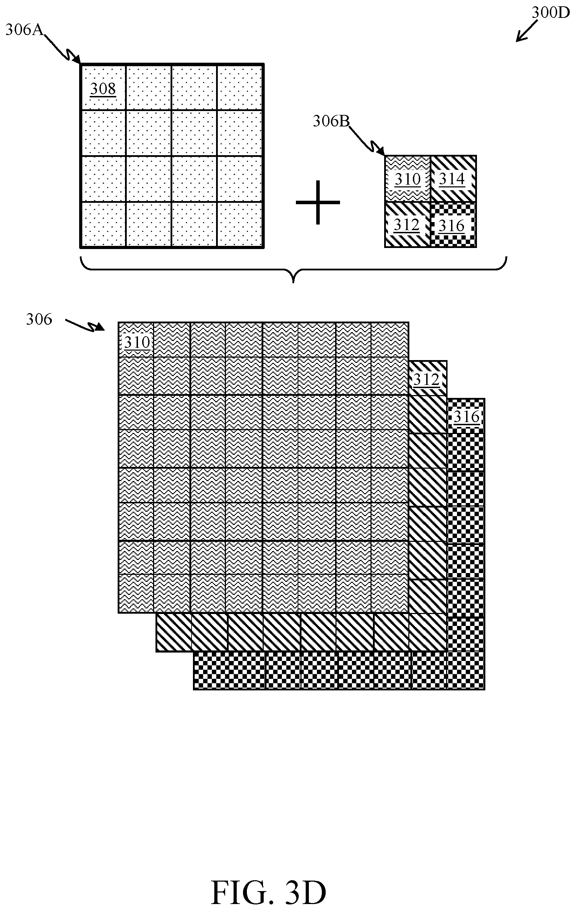

In accordance with an embodiment, the image sensor **200** further comprises a first output unit **204** configured to generate a monochrome output based on signals from a plurality of sensor pixels aligned with monochrome pixels, such as the monochrome pixel **106,** of the colour filter array **100.** In other words, few of the sensor pixels are aligned with the monochrome pixels **106** of the colour filter array **100,** where the sensor pixels **202A** produces signals based on the alignment, and that signals are received by the first output unit **204,** which further generate the monochrome output, as further shown in Fig. 3D.

In accordance with an embodiment, the image sensor **200** further comprises a second output unit **206** configured to generate a colour output based on signals from a plurality of sensor pixels aligned with colour pixels of the colour filter array **100.** In other words, few of the sensor pixels are aligned with the colour pixels of the colour filter array **100,** such as with the red colour pixel **108,** the green colour pixels **110** and **112,** and the blue colour pixel **114,** as shown in an example. The sensor pixels produce signals based on the alignment, and such signals are received by the second output unit **206,** which further generate the colour output, as further shown in FIG. 3D. In an implementation, the image sensor **200** may also be referred to as a panchromatic sensor (or a mono sensor). Beneficially, in contradiction to a conventional image sensor, the image sensor **200** receives more light even in a low light area.

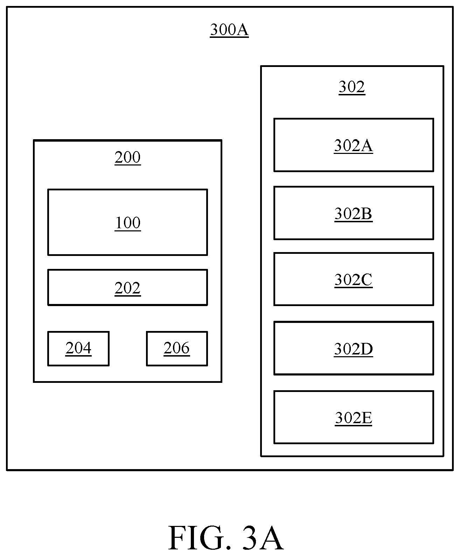

FIG. 3A is a block diagram that illustrates an image capture apparatus, in accordance with an embodiment of the present disclosure. With reference to FIG. 3A, there is shown an image capture apparatus **300A** that comprises the image sensor **200** and a processor **302.** The processor **302** further comprises an interpolation unit **302A,** a fusion unit **302B,** a demosaicing unit **302C,** a denoising unit **302D,** and a neural network **302E.**

The image capture apparatus **300A** may also be referred to as an image capture device, which generally includes an image capture unit (e.g., a camera) to capture an image. Examples of such image capture apparatus **300A** include, but are not limited to a smart phone, a digital camera, a digital video recorder, and the like.

The processor **302** may comprise suitable logic, circuitry, interfaces, and/or code that may be configured to execute a set of instructions stored in a memory. The processor **302** is configured to receive and process the data associated with the image sensor **200.** Examples of the processor **302** include, but are not limited to, an X86-based processor, a Reduced Instruction Set Computing (RISC) processor, an Application-Specific Integrated Circuit (ASIC) processor, a Complex Instruction Set Computing (CISC) processor.

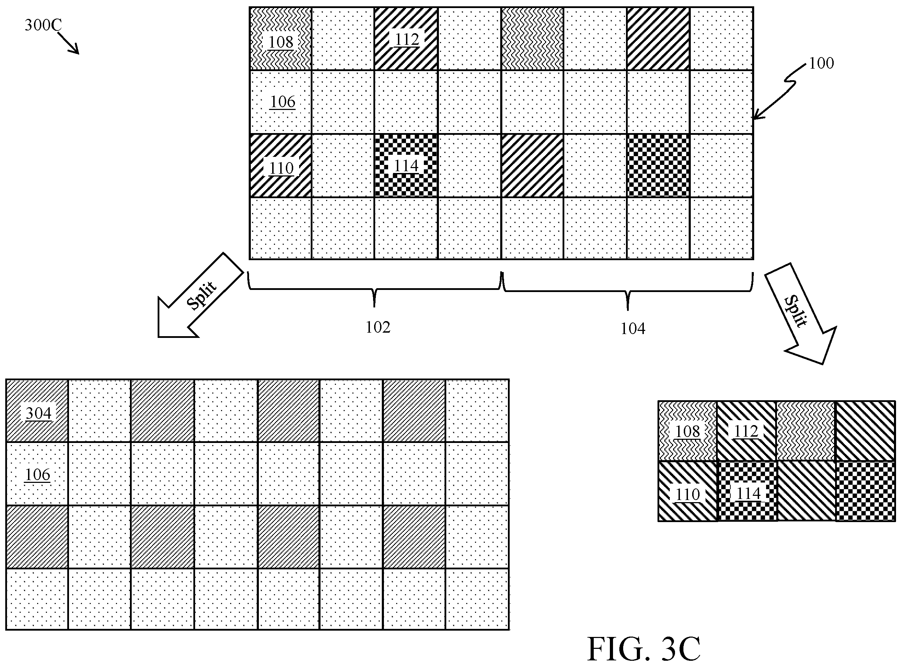

In accordance with an embodiment, the image processor **302** includes an interpolation unit **302A** configured to interpolate the monochrome signal value corresponding to a location of each colour pixel of the colour filter array **100.** In other words, interpolated monochrome signals are obtained after interpolating the monochrome signal using the interpolation unit **302A.** The interpolation unit **302A** is configured to perform estimation and for constructing a monochrome signal with new data points of the monochrome pixels (e.g., the monochrome pixel **106** of FIG. 1) within the range of a discrete set of known data points. The interpolated monochrome signals are arranged at the location of each of the colour pixels (e.g., the red colour pixel **108,** the green colour pixels **110** and **112,** and the blue colour pixel **114** of FIG. 1), as shown and further described in FIG. 3C.

In accordance with an embodiment, the image processor **302** includes a fusion unit **302B** configured to combine signals from the plurality of sensor pixels **202A** aligned with monochrome pixels, such as the monochrome pixel **106,** of the colour filter array **100** with signals from a plurality of sensor pixels aligned with colour pixels of the colour filter array **100.** In other words, few of the sensor pixels are aligned with the monochrome pixels **106** of the colour filter array **100,** while other sensor pixels are aligned with the colour pixels (e.g., the red colour pixel **108,** the green colour pixels **110** and **112,** and the blue colour pixel **114** of FIG. 1) of the colour filter array **100.** The fusion unit **302B** is configured to combine the signals (i.e., the monochrome output data and the colour output) received from the plurality of sensor pixels to produce a full colour image. The fusion unit **302B** is generally configured to combine two or more images of the same object and create a single new image that is more suitable from the human visual perspective. In an example, the fusion unit **302B** is configured to transforms the features of the two images (i.e. the monochrome output and the colour output) into a single new image.

In accordance with an embodiment, the fusion unit **302B** is implemented in hardware. In other words, the fusion unit **302B** is implemented in the hardware componentry of the image capture apparatus **300A.**

In accordance with an embodiment, the image processor **302** includes a demosaicing unit **302C** configured to demosaic signals from a plurality of sensor pixels aligned with colour pixels of the colour filter array **100** using a neural network **302E.** In other words, the demosaicing unit **302C** is configured to reconstruct a full colour image using the neural network **302E** from the incomplete image samples output signals (i.e. the colour output) received from the plurality of sensor pixels that are aligned with the colour pixels (for example, the red colour pixel **108,** the green colour pixels **110** and **112,** and the blue colour pixel **114)** of the colour filter array (CFA) **100.** The demosaicing unit 302C may also be referred to as a de-mosaicing, demosaicking or debayering unit in the art. The demosaicing unit **302C** is configured to reconstruct a full colour image from the incomplete image samples.

In accordance with an embodiment, the image processor **302** includes a denoising unit **302D** configured to reduce an amount of noise in signals from a plurality of sensor pixels aligned with colour pixels of the colour filter array **100** using a neural network **302E.** In other words, the denoising unit **302D** is configured to remove noise and reconstruct a full colour image from the incomplete image samples output signals (i.e., the colour output) received from the plurality of sensor pixels that are aligned with the colour pixels (for example, the red colour pixel **108,** the green colour pixels **110** and **112,** and the blue colour pixel **114)** of the colour filter array (CFA) **100.** It will be appreciated that the denoising unit **302D** is configured to remove noise from a noisy image and also to restore the full colour image. The neural network **302E** generally comprises artificial neurons to process the images captured by the image capture apparatus **300A.** In other words, the denoising unit **302D** is generally configured to recover meaningful information from noisy images in the process of noise removal and provide the full colour image.

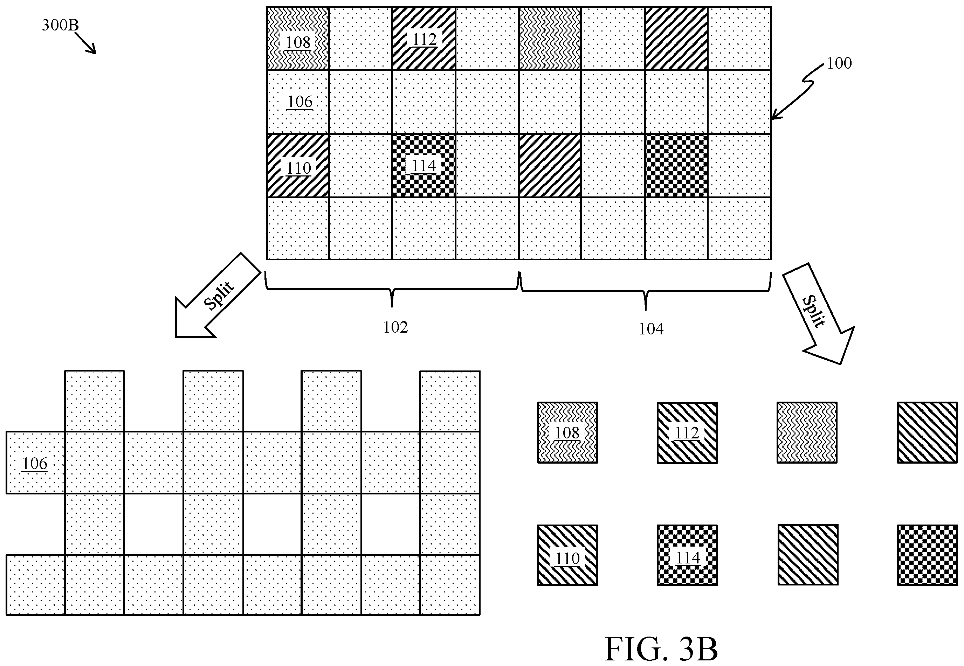

FIG. 3B is an exemplary implementation of the colour filter array for an image sensor, in accordance with an embodiment of the present disclosure. With reference to FIG. 3B, there is shown the exemplary implementation **300B** of the colour filter array **100** for an image sensor (e.g., the image sensor **200).** The colour filter array **100** is split into two parts, such as the monochrome pixels **106** with high resolution and the colour pixels of low resolution that are arranged separately. There is further shown that one colour pixel is arranged for each of the 2x2 pattern, such that the 4x4 pattern of each kernel, such as the kernel **102,** includes twelve monochrome pixels, such as the monochrome pixel **106** and four colour pixels, such as the red colour pixel **108,** the green colour pixels **110** and **112,** and the blue colour pixel **114** that are arranged in RGGB pattern.

FIG. 3C is an exemplary implementation of the colour filter array for an image sensor, in accordance with an embodiment of the present disclosure. With reference to FIG. 3C, there is shown the exemplary implementation **300C** of a colour filter array **100** for an image sensor (e.g., the image sensor **200).** The exemplary implementation **300C** represents interpolated monochrome pixels **304.**

The interpolated monochrome pixels **304** corresponds to the estimated data points for the monochrome signals of the monochrome pixels, such as the monochrome pixel **106,** as obtained by the interpolation unit **302A.** The colour filter array **100** is split into two parts, and the interpolated monochrome pixels **304** are arranged at the location of the colour pixels, as shown in an example. Optionally, the monochrome pixels, such as the monochrome pixel **106,** are of high resolution, and the colour pixel are of low resolution. There is further shown that each 2x2 pattern of the kernel **102** includes three monochrome pixels, and one colour pixel, wherein the four quadrants in each kernel are arranged in an RGGB pattern in kernel **102,** and similarly for the kernel **104.**

FIG. 3D is an exemplary implementation for the fusion of the monochrome output and the colour output, in accordance with another embodiment of the present disclosure. With reference to FIG. 3D, there is shown the exemplary implementation **300D** that represents a monochrome output **306A,** a colour output **306B,** and a first fusion pattern **306.** The monochrome output **306A** further includes plurality of the monochrome pixels, such as the monochrome pixel **308,** and the colour output **306B** further includes plurality of the colour pixels, such as the red colour pixel **310,** the green colour pixels **312** and **314,** and the blue colour pixel **316.**

In an implementation, the monochrome output **306A** is generated based on the signals received from the plurality of sensor pixels (e.g., the sensor pixel **202A** of FIG. 2) that are aligned with the monochrome pixels (e.g., the monochrome pixel **106** of FIG. 2) of the colour filter array. Similarly, the colour output **306B** is generated based on the signals received from the plurality of sensor pixels (e.g., the sensor pixel **202A** of FIG. 2) that are aligned with the colour pixels (e.g., the red colour pixel **108,** the green colour pixels **110** and **112,** and the blue colour pixel **114** of FIG. 2) of the colour filter array. The monochrome output **306A** includes the plurality of high-resolution monochrome pixels, such as the monochrome pixel **308,** and the colour output **306B** includes low resolution colour pixels, such as the red colour pixel **310,** the green colour pixels **312** and **314,** and the blue colour pixel **316** (arranged in RGGB pattern). The colour output **306B** is arranged in ratio of 1:4 with respect to the monochrome output **306A,** which means for each colour pixel, such as the red colour pixel **310,** the green colour pixels **312** and **314,** and the blue colour pixel **316** in the colour output **306B,** there are four monochrome pixels, such as the monochrome pixel **308** in the monochrome output **306A.** In an implementation, the fusion unit **302B** is configured for the fusion of the monochrome output **306A,** and the colour output **306B,** such as the monochrome output **306A** and the colour output **306B** (aligned with each other) act as an input for the fusion unit **302B,** and the first fusion pattern **306** is an output of the fusion unit **302B.** The first fusion pattern **306** represents a colour image as formed due to the fusion of the colour pixels, such as the red colour pixel **310,** the green colour pixels **312** and **314,** and the blue colour pixel **316,** and the monochrome pixels, such as the monochrome pixel **308.** The first fusion pattern **306** includes a plurality of colour pixels, such as the red colour pixel **310,** the green colour pixel **312 (or** the green colour pixel **314),** and the blue colour pixel **316..** In other words, the result of the first fusion pattern **306** is a three (3) channel (or planes) of a RGB pixels (or pattern), such as the red colour pixel **310,** the green colour pixel **312** (or the green colour pixel **314),** In an example, the monochrome output **306A** and the colour output **306B** are fused in a hardware (or using an image signal processor (ISP)). Optionally, the colour output **306B** may be reconstructed by using the demosaicing unit **302C,** the denoising unit **302D,** and the neural network **302E.**

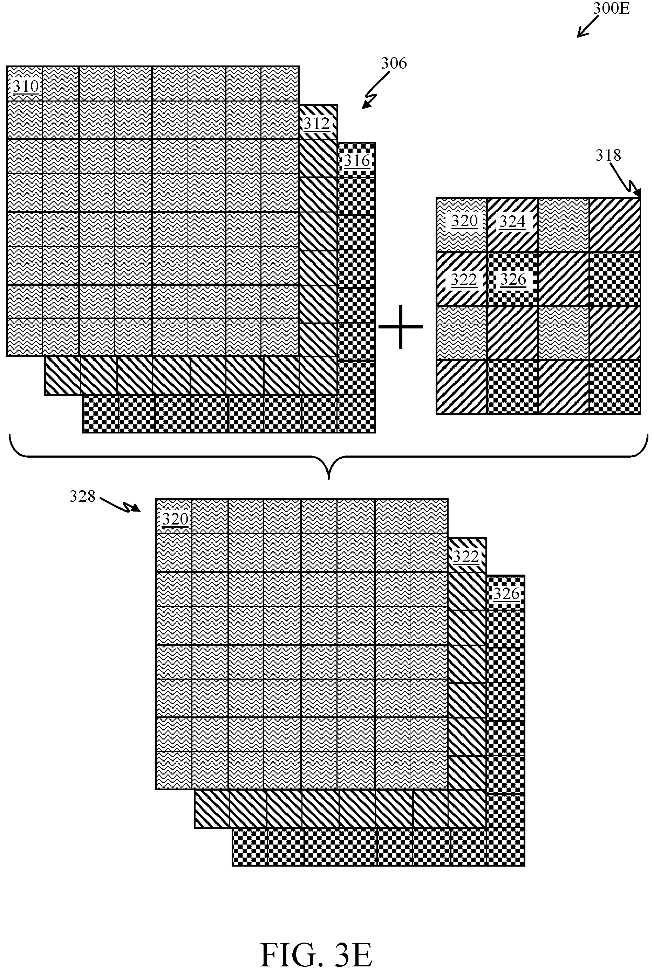

FIG. 3E is an exemplary implementation of an enhanced fusion of the first fusion pattern and the RGGB sensor output, in accordance with another embodiment of the present disclosure. With reference to FIG. 3E, there is shown the exemplary implementation **300E** that represents the first fusion pattern **306,** a RGGB sensor output **318,** and a second fusion pattern **328.**

The RGGB sensor output **318** includes a 4x4 matrix of colour pixels, such as the red colour pixel **320,** the green colour pixels **322** and **324,** and the blue colour pixel **326** (arranged in RGGB pattern). In an implementation, the first fusion pattern **306** (with low resolution) and the RGGB sensor output **318** are fused using the fusion unit **302B,** where the second fusion pattern **328** (with high resolution) is obtained as an output of the fusion unit **302B.** The second fusion pattern **328** may also be referred to as enhanced fusion pattern with a high-resolution colour image. The second fusion pattern **328** includes a plurality of colour pixels, such as the red colour pixel **320,** the green colour pixel **322 (or** the green colour pixel **324),** and the blue colour pixel **326..** In other words, the result of the second fusion pattern **328** is a three channel (or plane) of a RGB pixels (or pattern), such as the red colour pixel **320,** the green colour pixel **322** (or the green colour pixel **324),** and the blue colour pixel **326.**

In an implementation, the RGGB sensor output **318** is of the same field of view (FOV) as that of the colour pixels of the first fusion pattern **306,** and the visual artifact is also removed (or avoided). Optionally, the fusion is performed after alignment of the first fusion pattern **306** with the RGGB sensor output **318** so as to remove the parallax error. Further, the first fusion pattern **306** and the RGGB sensor output **318** are aligned in a simple manner as compared to the alignment of the monochrome pixel matrix **306A** and the colour pixel matrix **306B** (of FIG. 3D). Optionally, the RGGB sensor output **318** can be aligned with the monochrome image data **306A** either before or after formation of the first fusion pattern **306.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. An image capture apparatus (300A) comprising
an image sensor (200); and
an image processor (302);
wherein the image sensor comprises a colour filter array (100), wherein the colour filter array (100) comprises:
a plurality of pixels arranged in one or more kernels (102,104) of 4x4 pixels,
wherein each kernel (102,104) includes four quadrants (102A-102D, 104A-104D), each quadrant (102A-102D, 104A-104D) having three monochrome pixels (106) and one colour pixel (108, 110, 112, 114), and
wherein each kernel (102,104) includes quadrants (102A-102D, 104A-104D) corresponding to 3 or more different colours;
wherein the image sensor comprises an array of sensor pixels (202) aligned with the pixels of the colour filter array (100);
wherein the image processor (302) includes a fusion unit (302B) configured to combine signals from a plurality of sensor pixels (202A) aligned with monochrome pixels (106) of the colour filter array (100) with signals from a plurality of sensor pixels (202A) aligned with colour pixels (108, 110, 112, 114) of the colour filter array (100), and output a first fusion pattern (306);
wherein the fusion unit (302B) is further configured to fuse the first fusion pattern (306) and a RGGB sensor output (318) of the same field of view as that of colour pixels of the first fusion pattern, and output a second fusion pattern (328); wherein the RGGB sensor output (318) comprises colour pixels arranged in RGGB pattern, wherein the colour pixels comprise red colour pixels (320), green colour pixels (322, 324), and blue colour pixels (326).

2. The image capture apparatus (300A) of claim 1, wherein the image sensor (200) further comprises
a first output unit (204) configured to generate a monochrome output (306A) based on signals from a plurality of sensor pixels (202) aligned with monochrome pixels (106) of the colour filter array (100), and
a second output unit (206) configured to generate a colour output (306B) based on signals from a plurality of sensor pixels (202A) aligned with colour pixels (108, 110, 112, 114) of the colour filter array (100).

3. The image capture apparatus (300A) of claim 1 or 2, wherein the image processor (302) includes an interpolation unit (302A) configured to interpolate a monochrome signal (304) value corresponding to a location of each colour pixel (108, 110, 112, 114) of the colour filter array (100).

4. The image capture apparatus (300A) of any preceding claim, wherein the fusion unit (302B) is implemented in hardware.

5. The image capture apparatus (300A) of any preceding claim, wherein the colour pixels (108, 110, 112, 114) in each kernel (102,104) are arranged in a pattern selected from: RGGB (red-green-green-blue), RGBE (red-green-blue-emerald), RYYB (red-yellow-yellow-blue), CYYM (cyan-yellow-yellow-magenta), CYGM (cyan-yellow-green-magenta) and RGBW (red-green-blue-white).

## Patentansprüche

1. Bildaufnahmevorrichtung (300A), die umfasst:
einen Bildsensor (200); und
einen Bildprozessor (302);
wobei der Bildsensor ein Farbfilterarray (100) umfasst, wobei das Farbfilterarray (100) umfasst:
eine Vielzahl von Pixeln, die in einem oder mehreren Kerneln (102, 104) von 4x4 Pixeln angeordnet sind,
wobei jeder Kernel (102, 104) vier Quadranten (102A-102D, 104A-104D) einschließt, wobei jeder Quadrant (102A-102D, 104A-104D) drei monochrome Pixel (106) und ein Farbpixel (108, 110, 112, 114) aufweist, und
wobei jeder Kernel (102, 104) Quadranten (102A-102D, 104A-104D), die drei oder mehr unterschiedlichen Farben entsprechen, einschließt;
wobei der Bildsensor ein Array von Sensorpixeln (202), die mit den Pixeln des Farbfilterarrays (100) ausgerichtet sind, umfasst;
wobei der Bildprozessor (302) eine Fusionseinheit (302B), die konfiguriert ist, um Signale von einer Vielzahl von Sensorpixeln (202A), die mit monochromen Pixeln (106) des Farbfilterarrays (100) ausgerichtet sind, mit Signalen von einer Vielzahl von Sensorpixeln (202A), die mit Farbpixeln (108, 110, 112, 114) des Farbfilterarrays (100) ausgerichtet sind, zu kombinieren und ein erstes Fusionsmuster (306) auszugeben, einschließt;
wobei die Fusionseinheit (302B) ferner konfiguriert ist, um, das erste Fusionsmuster (306) und eine RGGB-Sensorausgabe (318) des gleichen Sichtfelds wie das der Farbpixel des ersten Fusionsmusters zu fusionieren und ein zweites Fusionsmuster (328) auszugeben; wobei die RGGB-Sensorausgabe (318) in einem RGGB-Muster angeordnete Farbpixel umfasst, wobei die Farbpixel rote Farbpixel (320), grüne Farbpixel (322, 324) und blaue Farbpixel (326) umfassen.

2. Bildaufnahmevorrichtung (300A) nach Anspruch 1, wobei der Bildsensor (200) ferner umfasst:
eine erste Ausgabeeinheit (204), die konfiguriert ist, um, eine monochrome Ausgabe (306A) basierend auf Signalen von einer Vielzahl von Sensorpixeln (202), die mit monochromen Pixeln (106) des Farbfilterarrays (100) ausgerichtet sind, zu erzeugen und eine zweite Ausgabeeinheit (206), die konfiguriert ist, um eine Farbausgabe (306B) basierend auf Signalen von einer Vielzahl von Sensorpixeln (202A), die mit Farbpixeln (108, 110, 112, 114) des Farbfilterarrays (100) ausgerichtet sind, zu erzeugen.

3. Bildaufnahmevorrichtung (300A) nach Anspruch 1 oder 2, wobei der Bildprozessor (302) eine Interpolationseinheit (302A), die konfiguriert ist, um einen Wert eines monochromen Signals (304) zu interpolieren, der einer Position jedes Farbpixels (108, 110, 112, 114) des Farbfilterarrays (100) entspricht, einschließt.

4. Bildaufnahmevorrichtung (300A) nach einem der vorstehenden Ansprüche, wobei die Fusionseinheit (302B) in Hardware implementiert ist.

5. Bildaufnahmevorrichtung (300A) nach einem der vorstehenden Ansprüche, wobei die Farbpixel (108, 110, 112, 114) in jedem Kernel (102, 104) in einem Muster angeordnet sind, das ausgewählt ist aus: RGGB (Rot-Grün-Grün-Blau), RGBE (Rot-Grün-Blau-Smaragd), RYYB (Rot-Gelb-Gelb-Blau), CYYM (Cyan-Gelb-Gelb-Magenta), CYGM (Cyan-Gelb-Grün-Magenta) und RGBW (Rot-Grün-Blau-Weiß).

## Revendications

1. Appareil de capture d'image (300A), comprenant
un capteur d'image (200) ; et
un processeur d'image (302) ;
dans lequel le capteur d'image comprend une matrice de filtres de couleur (100), dans lequel la matrice de filtres de couleur (100) comprend :
une pluralité de pixels agencés en un ou plusieurs noyaux (102, 104) de pixels 4x4, dans lequel chaque noyau (102, 104) comporte quatre quadrants (102A-102D, 104A-104D), chaque quadrant (102A-102D, 104A-104D) présentant trois pixels monochromes (106) et un pixel de couleur (108, 110, 112, 114), et
dans lequel chaque noyau (102, 104) comporte des quadrants (102A-102D, 104A-104D) correspondant à 3 couleurs différentes ou plus ;
dans lequel le capteur d'image comprend une matrice de pixels de capteur (202) alignés sur les pixels de la matrice de filtres de couleur (100) ;
dans lequel le processeur d'image (302) comporte une unité de fusion (302B) configurée pour combiner des signaux provenant d'une pluralité de pixels de capteur (202A) alignés sur des pixels monochromes (106) de la matrice de filtres de couleur (100) avec des signaux provenant d'une pluralité de pixels de capteur (202A) alignés sur des pixels de couleur (108, 110, 112, 114) de la matrice de filtres de couleur (100), et produire un premier modèle de fusion (306) ;
dans lequel l'unité de fusion (302B) est en outre configurée pour fusionner le premier modèle de fusion (306) et une sortie de capteur RGGB (318) du même champ de vision que celui des pixels de couleur du premier modèle de fusion, et produire un second modèle de fusion (328) ; dans lequel la sortie du capteur RGGB (318) comprend des pixels de couleur agencés selon un motif RGGB, dans lequel les pixels de couleur comprennent des pixels de couleur rouge (320), des pixels de couleur verte (322, 324) et des pixels de couleur bleue (326).

2. Appareil de capture d'image (300A) selon la revendication 1, dans lequel le capteur d'image (200) comprend en outre
une première unité de sortie (204) configurée pour générer une sortie monochrome (306A) sur la base de signaux provenant d'une pluralité de pixels de capteur (202) alignés sur des pixels monochromes (106) de la matrice de filtres de couleur (100), et
une seconde unité de sortie (206) configurée pour générer une sortie de couleur (306B) sur la base des signaux provenant d'une pluralité de pixels de capteur (202A) alignés sur des pixels de couleur (108, 110, 112, 114) de la matrice de filtres couleur (100).

3. Appareil de capture d'image (300A) selon la revendication 1 ou 2, dans lequel le processeur d'image (302) comporte une unité d'interpolation (302A) configurée pour interpoler une valeur de signal monochrome (304) correspondant à un emplacement de chaque pixel de couleur (108, 110, 112, 114) de la matrice de filtres de couleur (100).

4. Appareil de capture d'image (300A) selon l'une quelconque revendication précédente, dans lequel l'unité de fusion (302B) est implémentée dans le matériel.

5. Appareil de capture d'image (300A) selon l'une quelconque revendication précédente, dans lequel les pixels de couleur (108, 110, 112, 114) dans chaque noyau (102, 104) sont agencés selon un motif choisi parmi : RGGB (rouge-vert-vert-bleu), RGBE (rouge-vert-bleu-émeraude), RYYB (rouge-jaune-jaune-bleu), CYYM (cyan-jaune-jaune-magenta), CYGM (cyan-jaune-vert-magenta) et RGBW (rouge-vert-bleu-blanc).
